Europäisches Patentamt

European Patent Office

Office européen des brevets

(19)

(11) Publication number: **0 120 818**

**A1**

(12) # EUROPEAN PATENT APPLICATION

(21) Application number: **84830071.1**

(22) Date of filing: **16.03.84**

(51) Int. Cl.³: **B 60 P 3/11**

(30) Priority: **21.03.83 IT 2018183**

(43) Date of publication of application:
**03.10.84 Bulletin 84/40**

(84) Designated Contracting States:
**AT BE CH DE FR GB LI NL SE**

(71) Applicant: **OMAR DI OLDANI GAETANO**
**Via Stromboli, 20**
**I-20089 Rozzano Milano(IT)**

(72) Inventor: **Oldani, Gaetano**
**Via Stromboli 20**
**I-20089 Rozzano Milano(IT)**

(74) Representative: **Cicogna, Franco**
**Ufficio Internazionale Brevetti Dott.Prof. Franco Cicogna**
**Via Visconti di Modrone, 14/A**
**I-20122 Milano(IT)**

(54) **A tilting expandable flatbed semitrailer, particularly for helicopter road transportation.**

(57) A semitrailer particularly designated for transporting helicopters is disclosed which can also be used for road transportation of small and medium size airplaines. In particular, the semitrailer is adapted to drop the rear edge of its flatbed (1) substantially down to ground level. The semitrailer, moreover, is constructed to include a flatbed (1) which can be expanded within limits to fit a particular helicopter type to be transported thereby. Said semitrailer flatbed (1) also includes a means (7) of loading and unloading a helicopter, as well as a means of securing the helicopter in transit.

Fig. 1

EP 0 120 818 A1

This invention relates to a tilting expandable flatbed semitrailer, particularly for helicopter road transportation.

It is a known fact that no road vehicles specifically designed for helicopter transportation are currently available commercially. Accordingly, helicopters are moved from one place to another by means of general purpose trailers or semitrailers, which cannot, of course, give full assurance of a reliable form of helicopter transportation.

Traditional means of transportation generally include, in fact, a flatbed, and related center of gravity, located at a fairly high level, thereby when loaded with a helicopter, they are liable to undergo while travelling excessive transverse stresses, and hence likely to side skid to a dangerous extent.

Furthermore, the use of such prior means of transportation involves difficulties during the loading and unloading operations with helicopters, onto and from the flatbed of such means.

It is an object of this invention to obviate such prior drawbacks by providing a semitrailer for helicopter road transportation, which is constructed to simplify the helicopter loading and unloading operations, onto and from the semitrailer flatbed.

A further object of the invention is to provide a semitrailer for helicopter road transportation, the flatbed whereof is conveniently sunk down such that, in the loaded condition thereof, the maximum outline dimensions provided by the rules of the road are not exceeded.

It is another object of the invention to provide a semitrailer for helicopter road transportation, which has a flatbed the width whereof can be suitably changed to meet individual requirements.

Still another object of the invention is to provide a semitrailer for helicopter road transportation, which has adequate handling characteristics and can ensure a safe transportation.

These and other objects, such as will be apparent hereinafter, are achieved by a semitrailer for helicopter road transportation, according to the invention, characterized in that it comprises a sunk down flatbed having a releasable axle and an expandable rear portion whereat at least two connecting rods are mounted, said at least two connecting rods being driven by a hydraulic jack and adapted to rotate about a horizontal axis, said connecting rods being adapted to serve as supporting elements for said flatbed.

Further features and advantages of the semitrailer for helicopter transportation according to this invention will be more clearly understood from the following detailed description of a preferred embodiment thereof, in conjunction with the accompaning illustrative drawings, where:

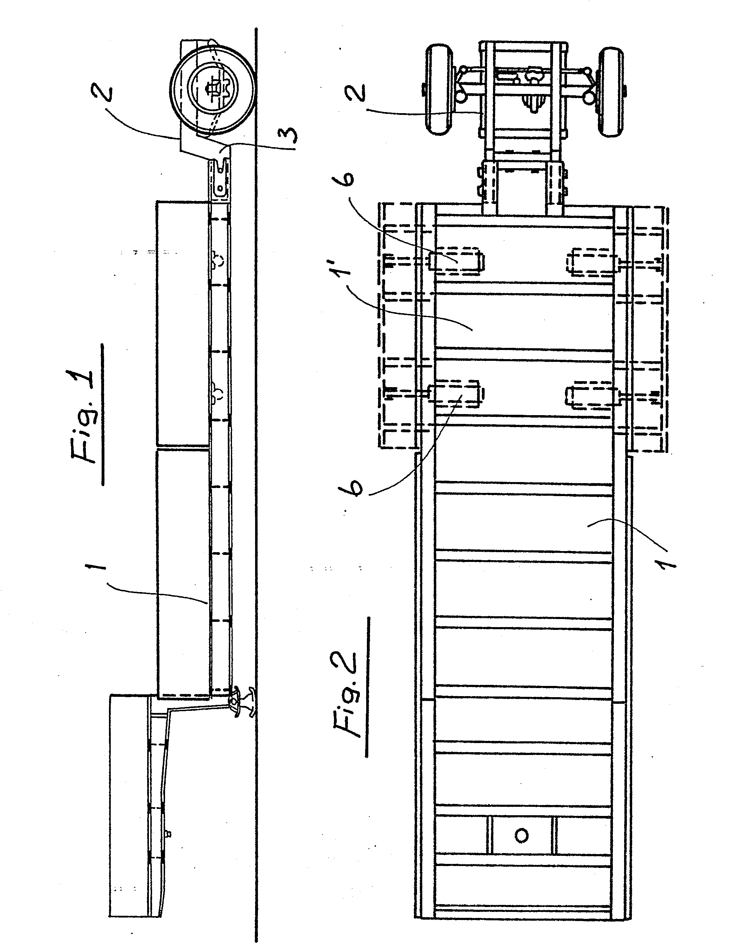

Figure 1 shows a schematical side elevation view of this semitrailer;

Figure 2 is a top plan view of that same semitrailer;

Figure 3 is a detail view of the axle removably attached to the flatbed of the semitrailer; and

Figures 4 and 5 illustrate the two attitudes to be taken by the flatbed according to the lay of the connecting rods adapted for rotation about their horizontal pivot axis.

With particular reference to the numerals used in the drawing views, this semitrailer for helicopter transportation comprises a flatbed 1, detachably hooked to a rear axle 2 the structure whereof includes two sunk bearing arms 3 for holding the flatbed at a minimum ground clearance position.

Advantageously, said axle incorporates a steering system controlled through a specially provided hydraulic system.

Articulated to the rear edge of said flatbed are two connecting rods 4 carrying an end roller 5 and being synchronously actuated by hydraulic jacks (not shown).

Furthermore, the rear portion 1 of the cited flatbed can be expanded by means of sideward moving structures which are connected prismatically to the flatbed frame and are driven by double-acting cylinders 6, or the like functional devices.

With such constructional provisions, in practice, a helicopter would be loaded onto the flatbed 1 after previously removing the rear axle and while propping the flatbed up by means of the connecting rods 3.

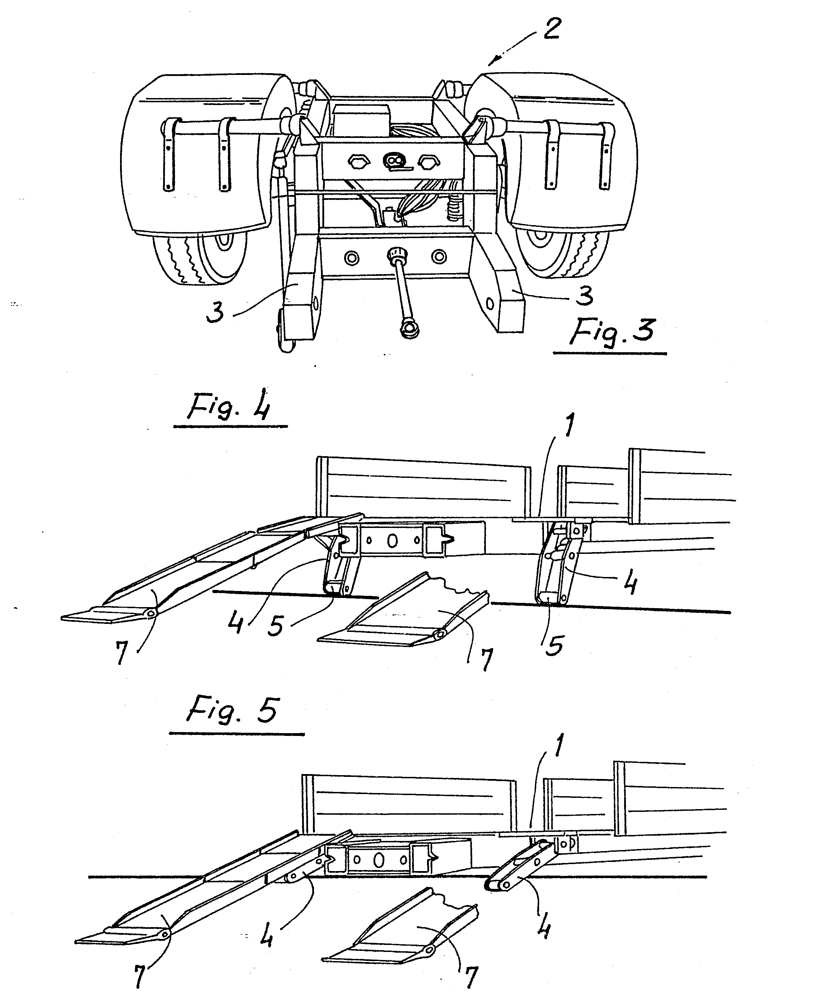

Thereafter, the connecting rods 3 are pivoted about their axes to bring the flatbed rear edge down to contact the ground surface (Figure 5).

Connected to said edge are, in particular, two folding ramps 7, which are extended hydraulically through independent means and serve as inclines wherealong the helicopter wheels are caused to roll up and down.

Advantageously, a hydraulically operated winch would be provided on the front portion of the flatbed, at the location of the semitrailer gooseneck, said winch being loaded with a length of wire cable for pulling the helicopter up and releasing it in the course of the loading/unloading operations.

The cited flatbed, moreover, is provided with adjustable retention members effective to stably secure the helicopter during the transportation thereof.

The front portion of the semitrailer has a shock absorber mounted thereon for cushioning the oscillations of the helicopter tail.

The cited hydraulic devices are operated, preferably, from a remote control keyboard and via an electro-hydraulic unit, which includes in particular a manually operated pump for emergency use in the event of an electric system failure.

Two manually pulled out bins are provided underneath the flatbed 1 for stowing the helicopter rotor blades therein.

It should be further noted that the semitrailer of this invention may also be utilized for transporting small and medium size airplanes, where the latter are designed for road transportation.

From the foregoing discussion and the accompanying drawing views, the highly functional design and practicability which characterize the semitrailer for helicopter road transportation of this invention are quite apparent.

Of course, this semitrailer has been described and illustrated hereinabove by way of example only, and for the purpose of showing the practicability and general features of this invention, and accordingly, any modifications and variations may be introduced therein as may occur to the skilled one in the art, without departing from the true scope of the instant inventive idea.

## CLAIMS

1. A semitrailer for helicopter road transportation, characterized in that it comprises a sunk down flatbed (1) having a rear releasable axle (2) and an expandable rear portion whereat at least two connecting rods (4) are mounted, said at least two connecting rods (4) being driven by a hydraulic jack and adapted to rotate about a horizontal axis, said connecting rods being adapted to serve as supporting elements for said flatbed (1).

2. A semitrailer according to Claim 1, characterized in that said rear axle is releasable and re-hookable hydraulically, and that it incorporates a steering system actuated through a specially provided hydrailic circuit.

3. A semitrailer according to Claim 1, characterized in that said flatbed (1) is expandable by means of sideward moving structures prismatically connected to the flatbed frame and being driven by double-acting cylinders or the like functional devices.

4. A semitrailer according to one or more of the preceding claims, characterized in that to the rear edge of said flatbed (1) there are connected two folding ramps (7) equipped with independent means of extension and acting as inclines.

5. A semitrailer according to one or more of the preceding claims, characterized in that it includes a hydraulically operated winch located on the flatbed front portion, at the gooseneck there-
of, and being loaded with a wire cable length for pulling up and releasing the helicopter during the
helicopter loading and unloading operations.

6. A semitrailer according to one or more
of the preceding claims, characterized in that provided on the flatbed thereof are suitable adjustable
retention members adapted to secure the helicopter in
transit, and that a shock absorber is provided at the
front portion thereof for taking in the oscillations
of the helicopter tail boom.

7. A semitrailer according to one or more
of the preceding claims, characterized in that said
hydraulic devices are controlled preferably from a
remote control keyboard through an electro-hydraulic
unit including, in particular, a manually operated
pump for emergency use in the event of an electric
system failure.

8. A semitrailer according to the preceding claims, characterized in that provided underneath said flatbed (1) are two mutually pulled out
bins for stowing the rotor blades of the helicopter
being transported therein.

0120818

Fig. 1

Fig. 2

0120818

Fig. 3

Fig. 4

Fig. 5

**0120818**

Application number

**EUROPEAN SEARCH REPORT**

European Patent Office

EP   84 83 0071

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| A | DE-B-1 292 520 (STEINBOCK)<br>* Column 1, lines 34-44; column 2, lines 29-40 * | 1-3,5 | B 60 P     3/11 |
| | --- | | |
| A | FR-A-1 354 621 (O.M. MARTINO CARELLO)<br>* Page 2, right-hand column, paragraph 3 * | 1,2,7 | |
| | --- | | |
| A | DE-A-1 755 344 (BAUER)<br><br>* Claims 1,6,7 * | 1,4,5, 8 | |
| | --- | | |
| A | DE-B-1 008 127 (RUHRSTAHL) | | |
| | ----- | | |

|  |
|---|
| **TECHNICAL FIELDS SEARCHED (Int. Cl. 3)** |
| B 60 P<br>B 62 D<br>B 64 F |

The present search report has been drawn up for all claims

| Place of search<br>THE HAGUE | Date of completion of the search<br>21-06-1984 | Examiner<br>SCHMITTER J.M. |
|---|---|---|

EPO Form 1503. 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document